Europäisches Patentamt

European Patent Office

Office européen des brevets

(11) Publication number: 0 349 171
A1

# EUROPEAN PATENT APPLICATION

(21) Application number: 89306135.8

(22) Date of filing: 16.06.89

(51) Int. Cl.⁴: B62D 33/04 , B60J 7/10

(30) Priority: 01.07.88 GB 8815710

(43) Date of publication of application:
03.01.90 Bulletin 90/01

(84) Designated Contracting States:
BE DE FR GB IT NL

(71) Applicant: YORK TRAILER COMPANY LIMITED
Yafforth Road
Northallerton North Yorkshire, DL7 8UE(GB)

(72) Inventor: Prescott, Paul Conway
40 Park Lane
Ripon North Yorkshire(GB)

(74) Representative: Allen, Oliver John Richard et
al
Lloyd Wise, Tregear & Co. Norman House
105-109 Strand
London, WC2R 0AE(GB)

(54) Improvements in and relating to curtain-sided trailers.

(57) A curtain (2) for a curtain-sided trailer, semi-trailer or rigid van-bodied vehicle having a lifting roof. The curtain (2) is of sufficient length to extend from the roof to the floor of the trailer or rigid vehicle and has releasable means (20) for reefing or shortening the curtain when the roof is in the lowered position.

EP 0 349 171 A1

## IMPROVEMENTS IN AND RELATING TO CURTAIN-SIDED TRAILERS

This invention relates to trailers, semi-trailers and rigid van-bodied vehicles and in particular to those having a "curtain-side" and a lifting roof.

Trailers and rigid van bodies are known in which the side walls are in the form of a sliding curtain made of PVC or the like. The top of the curtain is attached to the roof by means of runners which engage a rail fixed along the upper side edge of the trailer. The bottom of the curtain may be secured to the floor or a rail along the bottom side edge, preferably by straps or the like, which may be tensioned. The straps may be such as to extend down to just below the bottom edge of the curtain and have a hook on the end which engages a rave rail running along the floor of the trailer.

The tensioning means for each strap may for example comprise a buckle consisting of a frame portion attached to the curtain and an arm mounted within the frame which can pivot through 180° and through which the strap can be threaded so that manual pivoting of the arm downwards causes the strap to be tensioned and hence the hook to be moved up relative to the rave rail. When the buckle pivot arm is raised the hooks fall clear of the rave rail so that the curtains may be opened. When the buckle pivot arm is lowered the hooks are raised to firmly engage the rail and hence hold the bottom edge of firmly engage the rail and hence hold the bottom edge of the curtain adjacent to the trailer floor.

When it is desired to raise the roof the hooks may be disengaged from the rave rail by appropriate adjustment of the buckles. Once the curtain is free the roof raising mechanism can be operated. Subsequently the hooks and straps can be readjusted to re-engage the rave rail.

A problem which results from the roof lifting procedure is that a gap is left between the floor of the trailer and the bottom edge of the curtain corresponding to the distance the roof has been raised. Such a gap is highly undesirable if the trailer is to be used with the roof lifted, since it exposes the load to the elements and may cause drag.

One way to overcome this problem is to provide a curtain which is long enough to extend from the floor to the roof of the trailer when the roof is in its fully raised position. A disadvantage however with such an arrangement is that when the roof is in the lowered position the excess curtain hangs well below the trailer rave rail and may for example become trapped between the hooks and the rave rail, or otherwise damaged.

A curtain for a curtain-sided trailer, semi-trailer or a rigid van-bodied vehicle having a lifting roof and which is in accordance with this invention has releasable means for reefing or shortening the curtain when the roof is in its lowered position. This avoids any excess curtain length billowing out during trailer movement, the curtain being of sufficient length to extend from the roof to the floor of the trailer or rigid vehicle when the roof is in the raised position and the shortening means is released.

Preferably the releasable shortening means is a zip, which extends for substantially the whole width of the curtain and is positioned on the inside of the curtain preferably on the lower half below the buckle. Normally the two halves of the zip will be secured to the curtain distanced apart by a length equal to the length by which the curtain is to be shortened i.e. approximately the distance between the roof in its upper and lower positions.

The curtain may be secured to the floor of the trailer by straps tensioned by a buckle and hook arrangement. The bottom edge of the curtain may be attached to the hooks so that it is prevented from being blown about during transit.

Preferably the curtain is reinforced with strips of webbing which are heat-bonded to the curtain material and run from the top edge to the bottom edge at regular intervals along the inside of the curtain. Suitable materials for the curtain and the webbing respectively are polyester reinforced PVC and PVC coated plastic.

Preferably there is sufficient curtain material for the roof to be raised about 16 inches without a gap forming between the bottom edge of the curtain and the floor of the trailer or rigid vehicle.

The invention will now be described by way of example with reference to the accompanying drawings in which:

Figure 1 is a side view of the bottom of a curtain in accordance with the invention when the roof is in the lowered position;

Figure 2 is a side view of the bottom of the curtain when the roof is lifted;

Figure 3 is a front view of the buckle, strap and hook with the pivoting arm in the lowered position;

Figure 4 is a view of the inside of a curtain in accordance with the preferred embodiment of the invention with the zip undone;

Figure 5 is an enlarged cross-sectional view of a hook and curtain arrangement.

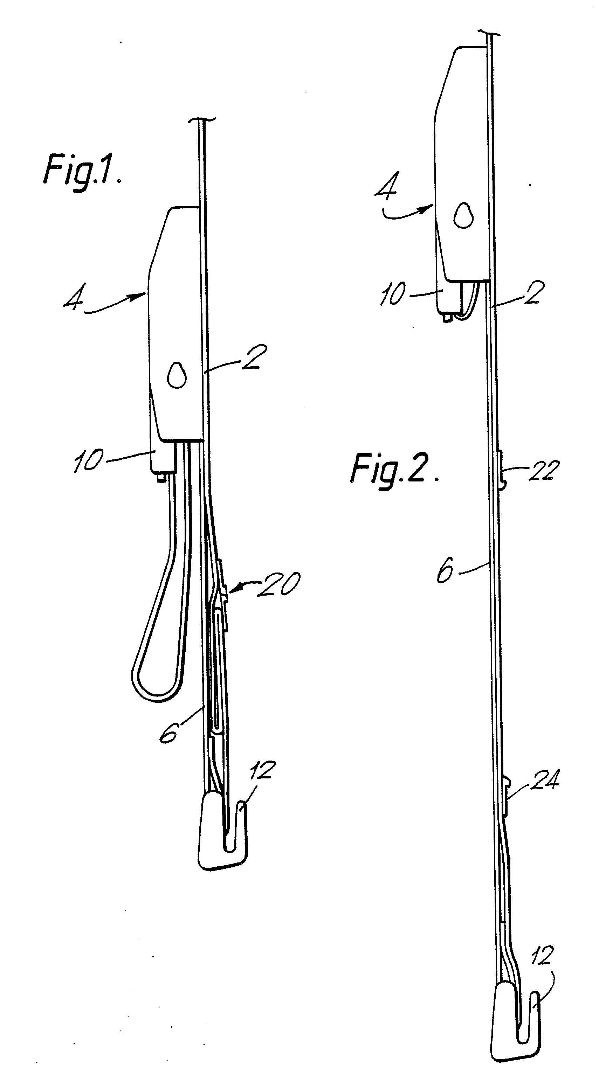

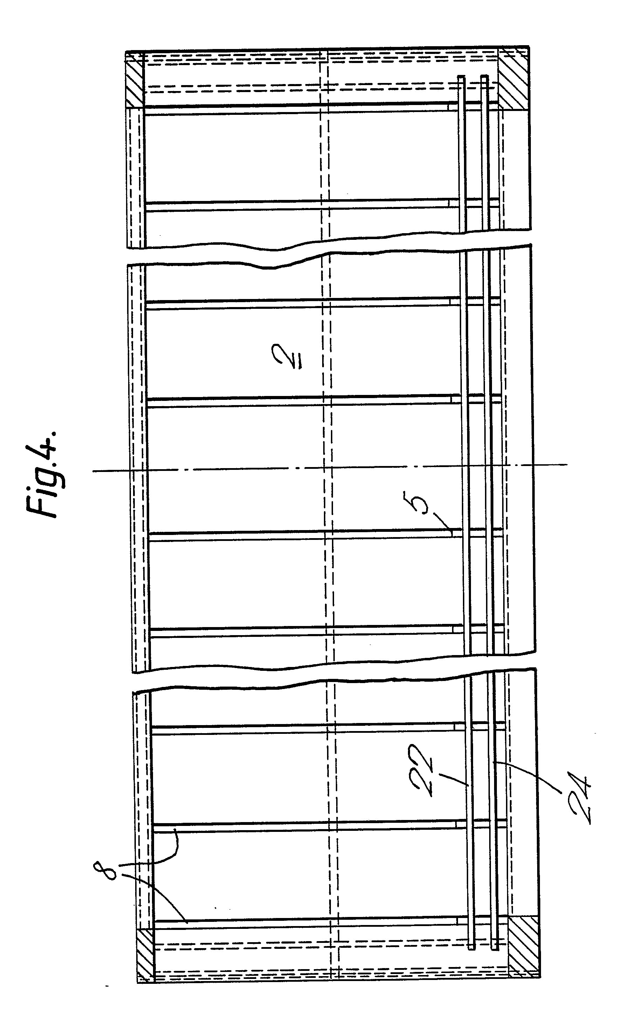

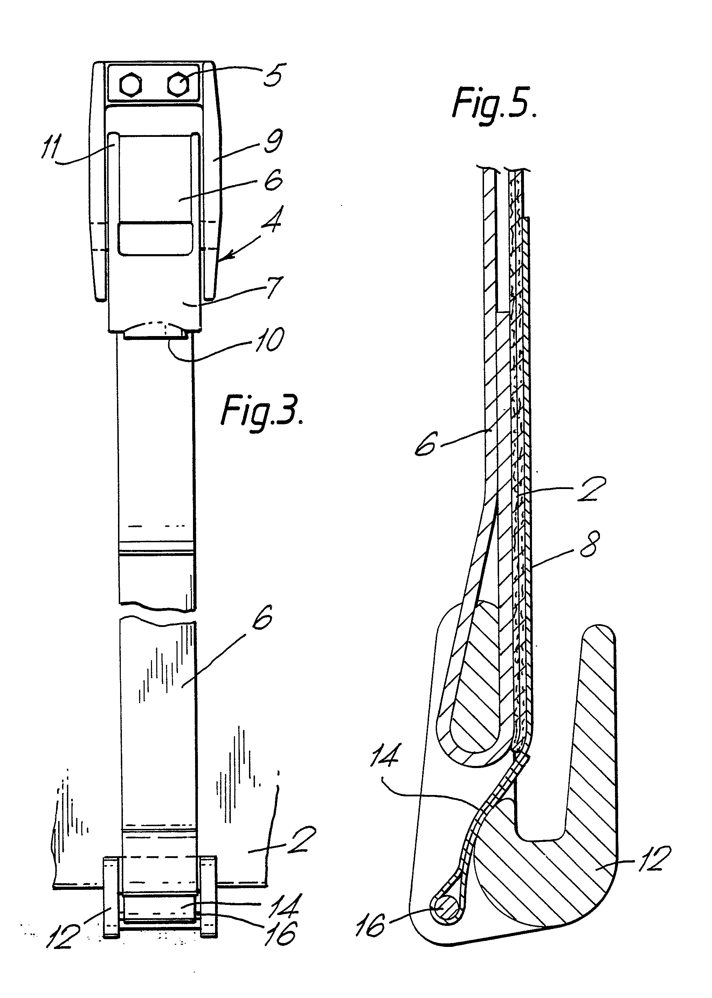

Referring to Figures 1 and 2 a trailer with a lifting roof is provided with a curtain 2 which has sufficient length to extend from the floor to the roof of the trailer when the roof is in the raised position. The curtain 2 has a buckle 4 attached through which a strap 6 is fitted. The end of the strap 6 carries a hook 12 for engagement with a rave rail (not shown) on the floor of the trailer. Each buckle 4 is fixed to the curtain 2 at the point where vertically positioned straps of reinforcing webbing 8 (see Fig. 5) are bonded to the curtain and is positioned a distance above the bottom edge of the curtain slightly greater than the distance the roof may be raised.

Referring to Figure 3 the buckle 4 consists of a substantially rectangular frame 9 which is fixed to the curtain 2 by means of screws 5 which screw into a metal plate (not shown) on the opposite side of the curtain to a buckle 4. Mounted to the frame, at the pivot point 11, is a pivoting arm 7 through which the strap 6 is threaded. The pivoting arm 7, which may be pivoted through 180°, around pivot 11, can be locked in the position shown in Figure 3 by a locking mechanism 10. The portion of the strap 6 in the arm 7 and the pivoting point 11 of the arms is such that upward pivoting of the arm causes the hook 12 to be lowered with respect to the rave rail while downward movement of the arm 7 raises the hook 12 into firm engagement with the rave rail.

As shown in Figure 4, a zip 20 is provided on the inside of the curtain below the fixing screws 5 of buckle 4 and extends across substantially the whole width of the curtain 2. The two parts 22, 24 of the zip 20 are positioned apart by a distance approximately equal to the distance through which the roof is raised or lowered.

As shown in Figure 1 the provision of a zip 20 means that the excess curtain that is present when the roof is in its lowered position can be neatly stored, so avoiding any damage being caused to the curtain.

The curtain 2 has reinforcing webbing 8 welded to it which is attached to the hook 12 as shown in Figure 5. The reinforcing webbing 8 is extended beyond the bottom edge of the curtain 2 to form a loop 14 which fits over a pin 16 provided on the side of the hook 12. The attachment of the curtain 2 to the hook 12 ensures that the bottom edge of the curtain is prevented from being blown about during transit.

Before the roof lifting mechanism is operated to raise the roof the pivot arm 7 of each buckle 4 is raised to release the hooks 12 from the rave rail. The zip 20 is then undone to release the fold of excess material and the roof is raised. The pivot arms 7 are then lowered to tension the straps 6 and are locked in position by the locking mechanism 10.

It will be appreciated that the zip or other releasable shortening means can be employed with a standard buckle or other means for attaching the lower edge of the curtain to the lower rail (or its equivalent) of the trailer.

Other shortening means could be used than a zip but a zip is preferred because of its ease of opening and its firm closure.

Thus a trailer or rigid vehicle is provided with curtains in accordance with the invention which extend from the floor to the roof of the trailer when the roof is raised so that the load is not exposed when the trailer is in transit but has provision for neatly storing the excess curtain in a position free from possible damage when the roof is in the lowered position.

## Claims

1. A curtain for a curtain-sided trailer, semi-trailer or rigid van-bodied vehicle having a lifting roof comprising releasable means (20) for shortening the curtain (2) when the roof is in the lowered position, the curtain (2) being of sufficient length to extend from the floor to the roof of the trailer or rigid vehicle when the roof is in the raised position and the shortening means (20) is released.

2. A curtain as claimed in Claim 1 wherein the releasable means (20) has two parts (22, 24) separated by a distance approximately equal to the distance between the roof in its raised and lowered positions, the two parts (22, 24) being connected when the curtain (2) is shortened.

3. A curtain as claimed in Claim 1 or 2 wherein the releasable shortening means (20) is a zip.

4. A curtain as claimed in Claim 3 wherein the zip (20) extends for substantially the whole width of the curtain (2).

5. A curtain as claimed in any preceding claim wherein the lower region of the curtain (2) is releasably securable to the floor or a rail along the bottom side edge of the trailer or rigid vehicle by straps (6) tensioned by a buckle (4) and hook (12) arrangement, the buckle (4) being attached to the curtain (2) and the hooks (12) engaging with the floor or rail.

6. A curtain as claimed in Claim 5 comprising reinforcing strips (8) of webbing attached to the curtain (2) in a vertical manner, the buckles (4) being positioned on the strips (8), slightly higher than the releasable shortening means (20) and the bottom edge of the curtain (2) being attached to the hooks (12).

7. A trailer or rigid van-bodied vehicle with a lifting roof having a curtain as claimed in any of the preceding claims wherein the curtain (2) extends along at least one side of the trailer, excess curtain length being stored when the roof is in a lowered position with the shortening means (20) closed, the load carried by the trailer being covered by the curtain (2) when the roof is in the raised position and the shortening means (20) is released.

Fig.1.

Fig.2.

Fig.4.

Fig.3.

Fig.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 092 039 (D. J. LUTKENHOUSE)<br>* Abstract; figures 1,2 *<br>--- | 1 | B 62 D 33/04<br>B 60 J 7/10 |
| A | FR-A-2 146 184 (G. MERLIN)<br>* figures 5,8,11-13 *<br>--- | 1 | |
| A | GB-A-1 542 812 (BOALLOY LTD.)<br>* figures 1,2,9,13,14 *<br>----- | 5,6 | |

TECHNICAL FIELDS
SEARCHED (Int. Cl.5)

B 62 D
B 60 J
B 60 P

The present search report has been drawn up for all claims

| Place of search | Date of completion of the search | Examiner |
|---|---|---|
| BERLIN | 13-09-1989 | LUDWIG H J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................

& : member of the same patent family, corresponding
document

EPO FORM 1503 03.82 (P0401)